# EUROPEAN PATENT SPECIFICATION

(11) **EP 4 630 730 B1**
(45) Date of publication and mention of the grant of the patent: **05.08.2026**
(21) Application number: 23825085.6
(22) Date of filing: 07.12.2023
(51) Int. Cl.: F22B 1/16, F01K 23/04, F01K 25/10

(54) **HEAT ENGINE**
WÄRMEKRAFTMASCHINE
MOTEUR THERMIQUE

(30) Priority: 07.12.2022 GB 202218411
(43) Date of publication of application: 15.10.2025
(73) Proprietor: United Kingdom Atomic Energy Authority, Abingdon, Oxfordshire OX14 3DB (GB)
(72) Inventor: ACRES, James Jack, Abingdon Oxfordshire OX14 3DB (GB)
(74) Representative: Appleyard Lees IP LLP
(86) International application number: PCT/GB2023/053159
(87) International publication number: WO 2024/121567

(56) References cited:
- JP-A- 2012 145 092
- US-A1- 2016 237 859
- US-A1- 2017 107 860
- US-A1- 2017 114 673

## Description

### Field of the Invention

The present invention relates generally to thermal power transfer and power generation systems, and more specifically to thermal power transfer and power generation systems relevant to extracting power from a nuclear fusion reactor (i.e., power systems as part of a nuclear fusion power plant); in particular a tokamak type reactor/power plant. More specifically, the present invention relates to a thermal power transfer and power generation system based on a modified Brayton cycle.

### Background

One of the great challenges facing nuclear fusion technology is how to convert the energy generated by a fusion reactor into useable electricity. In the context of tokamak type reactors particularly, a closed working fluid heat engine operating according to the (closed) Brayton cycle has been postulated as a potentially advantageous electrical generator.

One difficulty with efficiently utilising heat from a fusion reactor - in particular a tokamak type reactor - in a Brayton cycle / closed cycle gas turbine is that fusion reactors often have one or more sources of excessive low grade heat (i.e., low temperature). While high grade heat (i.e., high temperature) output from the reactor may be suitably put to use powering the heat engine, a question remains over what to be done about the low grade heat that is also produced. A simple answer is to simply consider the heat (and energy used to generate it) as wasted, but this of course has consequences for the efficiency of the power generation.

Hence it is desirable to develop a power transfer system which efficiently utilises all of the heat produced by the fusion reactor, in particular integrating excessive low grade heat from the reactor into the power cycle.

In the related art, US2017/0107860 discuss supercritical CO₂ heat generation using plural heat sources, US2017/0114673 discusses a supercritical CO₂ generation system applying recuperation to each heat source, and JP2012145092 discusses supercritical CO2 gas turbine power generation technology equipped with a centrifugal blower.

### Summary

The present invention is defined according to the independent claims. Additional features will be appreciated from the dependent claims and the description herein. Any embodiments which are described but which do not fall within the scope of the claims are to be interpreted merely as examples useful for a better understanding of the invention.

The example embodiments have been provided with a view to addressing at least some of the difficulties that are encountered with current approaches to thermal power transfer from a fusion reactor, whether those difficulties have been specifically mentioned above or will otherwise be appreciated from the discussion herein.

### Brief Description of the Drawings

For a better understanding of the present disclosure reference will now be made by way of example only to the accompanying drawings, in which:
Fig. 1 shows a schematic flow diagram of the closed Brayton cycle;
Fig. 2 shows a schematic flow diagram of an example heat engine based on an improved Brayton cycle;
Fig. 3 shows a schematic flow diagram of another example heat engine based on an improved Brayton cycle;
Fig. 4 shows a schematic flow diagram of another example heat engine based on an improved Brayton cycle;
Fig. 5 shows a schematic of an example nuclear fusion power system.

### Detailed Description

At least some of the following example embodiments provide an heat engine for use in generating electricity from a fusion power plant - in particular an improved thermal transfer power system based on a modified Brayton cycle. Other advantages and improvements may also be apparent from the discussed embodiments herein.

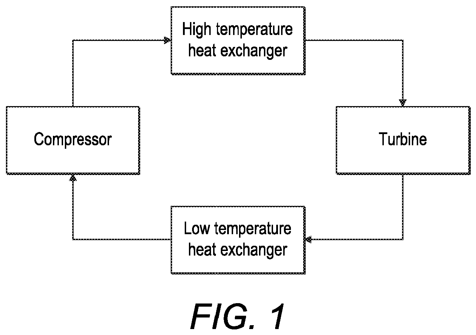

Figure 1 shows the basic schematic flow diagram of the closed Brayton cycle. A working fluid (gas) is compressed by a compressor to increase the temperature and pressure of the working fluid. The high pressure working fluid is further heated (ideally isobarically) by a heat exchanger, and then the heated fluid is used to turn a turbine to produce useful external work - e.g., generating electricity. The turbine is an expander such that the working fluid reduces pressure on the outlet side of the turbine before being passed through another heat exchanger to remove any excess heat. The working fluid is then directed back into the compressor for the cycle to continue.

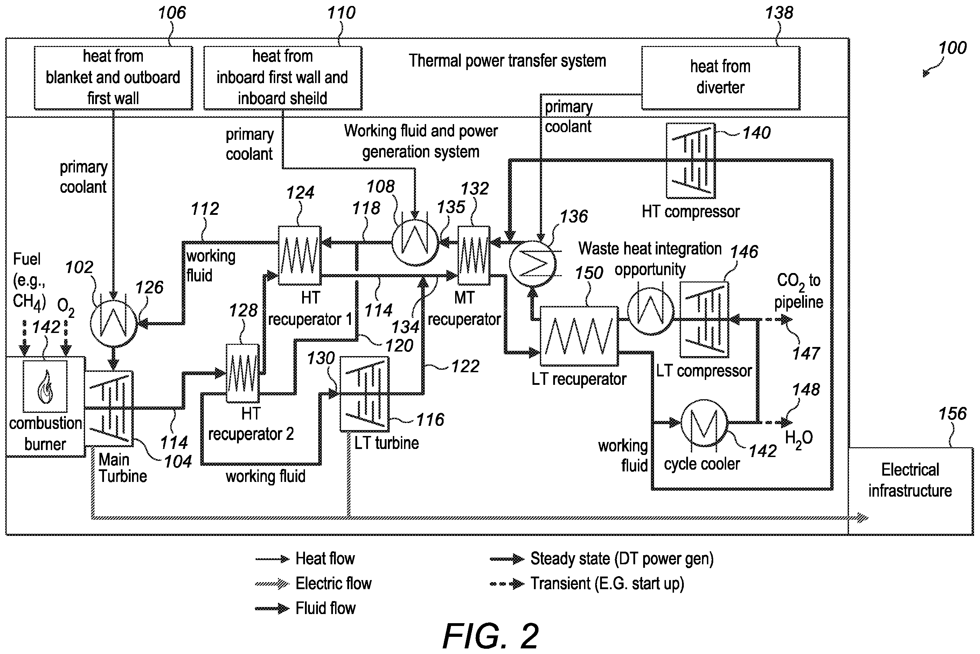

Figure 2 shows a schematic flow diagram of a heat engine 100 based on a modified (improved) Brayton cycle. The present heat engine has been developed particularly for use with tokamak type reactors, for example the Spherical Tokamak for Energy Production 'STEP' project being implemented by the Applicant. The heat engine utilises a working fluid in a closed cycle configuration. The working fluid is preferably a gas, and further preferably super critical carbon dioxide. Suitably, the working fluid network structure shown in Figure 2 can be taken to be formed from a suitable array of piping, inlets, outlets, valves, and other such fluidically coupling components as would be familiar to those in the art.

The heat engine 100 comprises a primary heat exchanger 102 and a main turbine 104 which produces external work due to flow of the (heated) working fluid through the main turbine 104. The primary heat exchanger 102 is suitably coupled to a primary heat source 106 which may be considered as providing high grade temperature. In this way the working fluid may be suitably heated by the primary heat exchanger 102 using energy from the primary heat source 106. In the context of a tokamak, particularly STEP, the primary (high grade) heat source 106 may be heat from a blanket module surrounding the vacuum vessel of the reactor, and/or from an outboard first wall of the vacuum vessel. Here the primary heat provided to the primary heat exchanger (i.e., the high grade temperature) is preferably at least 500°C (degrees centigrade), and further preferable at least 600°C.

The heat engine 100 also comprises a secondary heat exchanger 108 suitably coupled to a secondary heat source 110. In this way the working fluid may be suitably heated by the secondary heat exchanger 108 using energy from the secondary heat source 110. The secondary heat source 110 may be considered as providing a low grade heat. In other words, the secondary heat source 100 provides a lower temperature than the primary heat source 106. In the context of a tokamak, particularly STEP, the secondary heat source 110 may be heat from an inboard first wall of the vacuum vessel and/or inboard radiation shield. Here the secondary heat provided to the secondary heat exchanger (i.e., the low grade temperature) is typically substantially equal to or lower than 300°C.

At least some working fluid output from the secondary heat exchanger 108 is input to the primary heat exchanger 102. In this way, the secondary heat exchanger 108 preheats the working fluid input to the primary heat exchanger 102, thereby making heating of the working fluid by the primary heat exchanger 102 more efficient. Suitably, the main turbine 104 receives working fluid output from the primary heat exchanger 102 which has been heated by both the secondary heat exchanger and the primary heat exchanger. In other words, the secondary heat exchanger 108, the primary heat exchanger 102, and the main turbine 104 are connected in a series flow path 112. By way of example, for STEP the temperature of the working fluid output after the primary heat exchanger and so input to the main turbine 104 (i.e., after the heating phases) may be greater than 500°C. Working fluid outflow 114 from the main turbine 104 (which, for example, may be in a temperature range of 300 to 500°C) follows a suitable (recovery) flow loop back to the inflow of the secondary heat exchanger 108; components of the working fluid recovery loop are discussed below.

The heat engine 100 also comprises an auxiliary turbine 116 which is configured in flow parallel with the main turbine. More specifically, a branching point 118 for parallel flow in the heat engine 100 is in between the primary heat exchanger 102 and the secondary heat exchanger 108. In this way, the auxiliary turbine 116 is also isolated from the primary heat exchanger 102 (by being arranged on separate fluid path 120 to the fluid path 112), so that the auxiliary turbine 116 receives working fluid heated by the secondary heat exchanger 108, but not the primary heat exchanger 102. Outflow 122 from the auxiliary turbine joins the outflow 114 from the main turbine to follow the same recovery loop back to the second heat exchanger 108.

The branch point 118 may suitably comprise a controllable valve configured to control a flowrate of working fluid directed from the secondary heat exchanger 108 to the main turbine 104 (via the primary heat exchanger 102) and the auxiliary turbine 116. In this way a flow rate of the working fluid along paths 112 and 120 may be suitable controlled based on the desired operating parameters of the system.

In one example, the split in flow rate may be varied according to variations in temperature of the primary and secondary heat sources 106, 110 (e.g., to compensate for lower primary or secondary temperature).

In another example, the flow rate split between the two turbines may be based on a power output of the turbines. That is, the flow split can be suitably optimised for energy production by varying flow to each of the turbines. In particular, computer simulations of the heat engine 100 may be utilised to calculate a flow rate for each of the paths 112, 120 that will yield maximum performance (i.e., electricity production) from the turbines based on real world input data of the primary and secondary heat sources (amongst other performance parameters of the heat engine 100, such as fluid temperature, etc).

The split in flow rate may also be varied according to operational parameters of the heat engine 100 in order to e.g., ensure safe or efficient operation of the heat engine. An example parameter is the temperature of the working fluid, and suitable temperature sensors (not shown) may be positioned at various locations throughout the heat engine 100. In particular, a sensor positioned to measure inflow temperature to the primary heat exchanger 102 may be utilised to control the branch point valve 116 to reduce to reduce a flow rate to the primary heat exchanger 102 when a temperature of the inflow working fluid exceeds a predetermined value (too high an inlet temperature can degrade efficiency of the primary heat exchanger 102).

As shown, the heat engine 100 may also comprise one or more recuperators: recuperators are heat exchangers arranged to thermally couple turbine inflow paths with turbine outflow paths, which allows excess heat to be recovered from the turbine outflows (i.e., to remove enthalpy from a turbine exit stream). In this way the inflow heating may be made more efficient, and less heat wasted.

A first recuperator 124 may be configured to thermally couple working fluid outflow 114 from the main turbine with working fluid inflow 126 of the primary heat exchanger 102. Suitably, the branch point 118 between the flow paths 112, 120 is arranged before the first recuperator 124 (i.e., between it and the secondary heat exchanger 108). Put another way, the first recuperator 124 is part of the flow path 112 and so in series with the secondary heat exchanger 108 and primary heat exchanger 102.

A second recuperator 128 may be configured to thermally couple the outflow 114 form the main turbine 104 to the inflow 130 of the auxiliary turbine 116. Suitably, the second recuperator forms a series flow (along path 120) with the auxiliary turbine 116. Such a recuperator may significantly increase the temperature of the auxiliary turbine inflow (e.g., up to 450°C) above what would otherwise be achievable with only the heat provided to the working fluid by the secondary heat source 110. In other words, the second recuperator 128 is provided to maximise the heat into the auxiliary turbine 116, thereby increasing its performance. The second recuperator 128 also provides a useful auxiliary heat dump for the exit stream 114, as in situations where the primary heat source is too hot, it is not desirable to recuperate heat back into the inflow 126 via the first recuperator 124.

A third recuperator 132 may be configured to thermally couple the combined working fluid outflow 134 from the main turbine 104 and the auxiliary turbine 116 with inflow 135 to the secondary heat exchanger 108.

Some reactors may comprise greater than two low grade heat sources, and so suitably the heat engine 100 may also comprise a tertiary heat exchanger 136 suitably coupled to a tertiary heat source 138. The tertiary heat source 138 is suitably lower temperature than the primary heat source 106, and also preferably lower temperature than the secondary heat source 110. In the context of a tokamak, particularly STEP, the tertiary heat source 138 may be heat from a divertor component of the reactor.

The tertiary heat exchanger 136 is arranged in series with the second heat exchanger 108 (optimally via the third recuperator 132) so as to preheat the working fluid prior to the secondary heat exchanger 108.

The combined outflow / exit stream 134 from the two turbines, having passed through one or more of the recuperators discussed above (not all need be present, although it is preferred at least one is to remove enthalpy from the turbine exit analogous to Fig. 1), is passed through a (main) compressor 140 and then fed back to the secondary heat exchanger 110 (or if present, tertiary heat exchanger 136) for the cycle to repeat. That is, the exit stream from the main turbine 104 and auxiliary turbine 116 are re-joined into a common flow path 134 which is coupled to the inflow 135 to the secondary heat exchanger 108 via at least one compressor, analogous to the usual Brayton cycle.

The present disclosure also optionally allows for further modification of the Brayton cycle to incorporate an oxy-combustion direct cycle. Here, the heat engine 100 comprises a combustion burner 142, which burns a fuel of natural gas and oxygen. The combustion burner 142 provides additional, non-fusion based, heating to the working fluid inflow to the main turbine 104. The recovery loop may be suitably adapted to accommodate an oxy combustion element by providing a condenser, with excess H₂0 and CO₂ (introduced by combustion) extracted via suitable fluid paths 147, 148.

In addition, a fourth recuperator 150 may be arranged to thermally couple the combined turbine exit stream 134 to the inflow to the secondary heat exchanger 108 or tertiary heat exchanger 136, as appropriate.

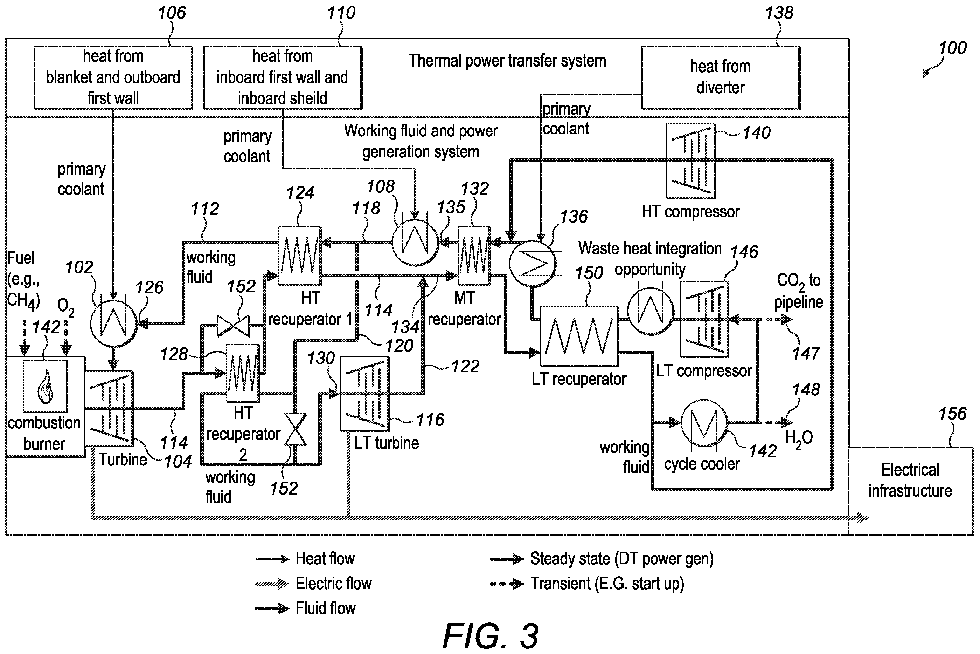

Figure 3 shows an alternative arrangement of the heat engine 100 of Fig. 2 in which the system 100 comprises a bypass 152 of the second recuperator 128. Specifically, one or both of the exit stream 114 from the main turbine 104, or the inflow 130 to the auxiliary turbine 116, may be provided with the bypass 152. The bypass 152 is particular advantageous in situations where unexpectedly high low grade heat may be encountered, thereby provided a way to prevent the inflow 130 to the auxiliary turbine 116 getting too hot by stopping heat transfer from the main turbine exit stream 114. Suitably, a temperature sensor may be coupled to the secondary heat source 110, or preferably the working fluid path 120 (i.e., inflow to the second recuperator 128), the data from which may be used to determine that the system would benefit from isolating the second recuperator 128, and the bypass controlled accordingly.

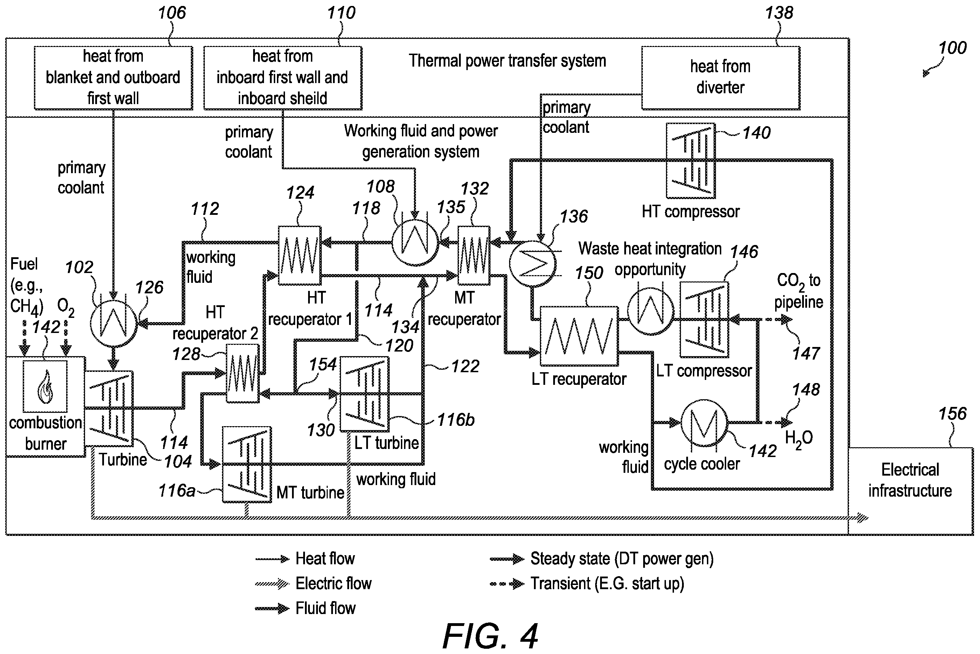

Figure 4 shows another example of the heat engine 100 comprising a set of auxiliary turbines 116 - here 116a and 116b. Each turbine 116a,b in the set 116 may be preferably configured to operate at different optimal fluid temperatures, with each of the auxiliary turbines 116 being preferably arranged in parallel. Here a branch point 154 is provided between the first auxiliary turbine 116a and the second auxiliary turbine 116b, so that the first auxiliary turbine 114a has its inflow thermally coupled to the main turbine exit stream 116, while the second auxiliary turbine only receives fluid from the secondary heat exchanger 108.

Suitably, for each of the examples of Figs 2-4, the main turbine 104 and auxiliary turbine(s) 116 are coupled to suitable electrical generators to generate electricity to be distributed over suitable electrical infrastructure 156.

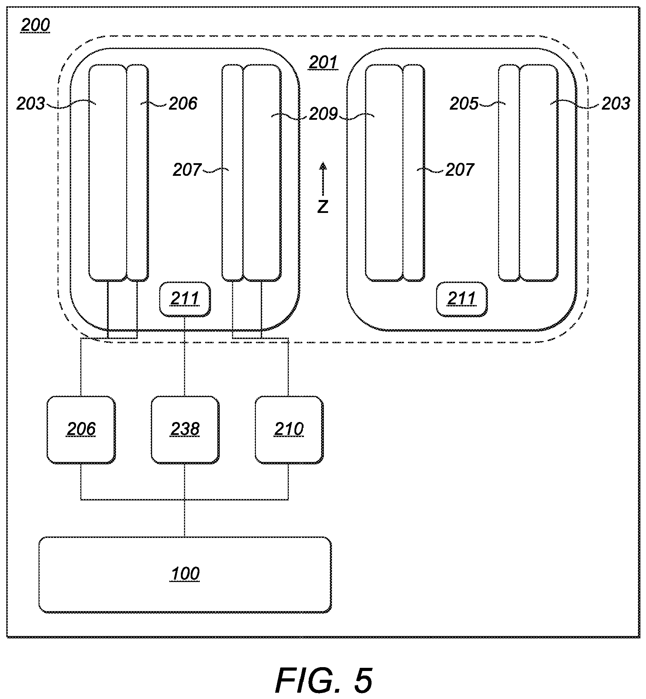

Figure 5 shows an example nuclear fusion power system 200 (i.e., for producing electrical power) incorporating an example heat engine 100.

Here the fusion power system comprises a reactor 201 comprising a primary heat source 206 and a secondary heat source 210. As above, the primary heat source 206 may be considered a high grade heat source, while the secondary heat source may be considered a low grade heat source, and as such the primary heat source has a great temperature than the secondary heat source (at least during normal operation of the reactor).

In a preferred example, the reactor 201 is a tokamak. Suitably the primary heat source 206 may comprises heat from at least one of a reactor blanket 203 and an outbound first wall 205 (i.e., components towards the exterior of the reactor 201), while the secondary heat source comprises heat from at least one an inboard first wall 207 and an inboard (radiation) shield 209 (i.e., components towards the interior of the reactor 201, proximate to the central cylindrical 'z' axis of a tokamak). Suitably, the reactor 201 may also comprise a tertiary heat source 238, which may comprise heat from a divertor 211.

Suitably, the respective heat sources 206, 210, 238 may be coupled to respective heat exchangers (primary, secondary, tertiary) of the heat engine 100 described above so as to transfer thermal power from the reactor 201 to the turbines of the heat engine to generate electricity therefrom.

In summary, exemplary embodiments of an improved thermal power transfer system for a nuclear fusion power plant have been described.

The described exemplary embodiments enable more efficient use of the heat produced by a reactor in a controllable fashion which is adaptable to different reactors. In particular, the exemplary embodiments may achieve high efficiency from a fusion reactor with a large proportion of low grade heat.

The example apparatus may be manufactured industrially. An industrial application of the example embodiments will be clear from the discussion herein. Additionally, the described exemplary embodiments are convenient to manufacture and straightforward to use.

Although preferred embodiment(s) of the present invention have been shown and described, it will be appreciated by those skilled in the art that changes may be made without departing from the scope of the invention as defined in the claims and as described above.

All of the features disclosed in this specification, and/or all of the steps of any method or process so disclosed, may be combined in any combination, except combinations where at least some of such features and/or steps are mutually exclusive.

## Claims

1. A heat engine (100) for use in electrical power generation in a fusion power system, comprising
a primary heat exchanger (102) coupled to a primary heat source (106), and a secondary heat exchanger (108) coupled to a secondary heat source (110), the secondary heat source being thermally independent to the primary heat source with the primary heat source having greater temperature than the secondary heat source, and wherein the primary and secondary heat exchangers are configured to heat a working fluid, wherein the primary heat exchanger is configured to receive working fluid heated by the secondary heat exchanger;
a main turbine (104) and an auxiliary turbine (116) configured in flow parallel, wherein a branch point (118) for parallel flow is arranged in between the primary heat exchanger and the secondary heat exchanger, and wherein the main turbine receives working fluid heated by the secondary heat exchanger and subsequently the primary heat exchanger, and wherein the auxiliary turbine receives working fluid heated by the secondary heat exchanger; and
a first recuperator (124) configured to thermally couple working fluid outflow from the main turbine to working fluid inflow to the primary heat exchanger.

2. The heat engine of claim 1, wherein the branch point comprises a controllable valve configured to control a flowrate of working fluid directed from the secondary heat exchanger to the main turbine and the auxiliary turbine.

3. The heat engine of claim 2, further comprising a temperature sensor coupled to the working fluid inflow to the primary heat exchanger, and wherein the valve is controlled to reduce a flow rate to the primary heat exchanger when a temperature of the inflow to the primary heat exchanger exceeds a predetermined value.

4. The heat engine of claim 3, wherein the branch point is arranged in between the first recuperator and the secondary heat exchanger.

5. The heat engine of any preceding claim, further comprising a second recuperator (128) configured to thermally couple outflow from the main turbine to inflow to the auxiliary turbine.

6. The heat engine of claim 5, further comprising a bypass of the second recuperator on at least one of the outflow from the main turbine and inflow to the auxiliary turbine.

7. The heat engine of any preceding claim, further comprising a third recuperator (132) configured to thermally couple combined working fluid outflow from the main turbine and the auxiliary turbine to working fluid inflow to the secondary heat exchanger.

8. The heat engine of any preceding claim, further comprising a tertiary heat exchanger (136) configured to heat the working fluid, the tertiary heat exchanger being coupled to a tertiary heat source (138) having lower temperature than the primary heat source.

9. The heat engine of claim 8, wherein the tertiary heat exchanger is arranged in flow series with the secondary heat exchanger to preheat working fluid prior to the secondary heat exchanger.

10. The heat engine of claim 8 or 9, when also dependent on claim 7, wherein the third recuperator is arranged in between the secondary and tertiary heat exchangers.

11. The heat engine of any preceding claim, wherein the auxiliary turbine is a first one of a set of auxiliary turbines.

12. The heat engine of claim 11, wherein each turbine of the set of auxiliary turbines is configured to operate at a different fluid temperate.

13. The heat engine of any preceding claim, further comprising a combustion burner (142) configured to heat working fluid received by the main turbine.

14. A nuclear fusion power system (200) comprising:
a reactor (201) comprising a primary heat source (206) and a secondary heat source (210), the secondary heat source being thermally independent to the primary heat source and the primary heat source having greater temperature than the secondary heat source in normal operation;
the heat engine of any preceding claim, wherein the primary heat exchanger is coupled to the primary heat source of the reactor, and the secondary heat exchanger is coupled to the secondary heat source of the reactor.

15. A method of operating a closed working fluid heat engine according to claims 1-13 in a nuclear fusion power system according to claim 14, the power system comprising a reactor yielding a primary heat source and a secondary heat source, the secondary heat source being thermally independent to the primary heat source with the primary heat source having greater temperature than the secondary heat source, the method comprising:
heating the working fluid using a secondary heat exchanger coupled to the secondary heat source;
controllably splitting the working fluid flow heated by the secondary heat exchanger between parallel fluid paths;
on one parallel fluid path, additionally heating the working fluid using a first recuperator coupled to working fluid outflow from a main turbine and a primary heat exchanger coupled to the primary heat source, and working the main turbine using the working fluid heated by the primary and secondary heat exchangers and the first recuperator;
on another parallel path, working an auxiliary turbine using working fluid heated by the secondary heat exchanger;
re-joining working fluid exiting the primary and auxiliary turbines into a common flow path coupled to an inflow to the secondary heat exchanger via at least one compressor.

## Patentansprüche

1. Wärmekraftmaschine (100) zur Verwendung bei der Stromerzeugung in einem Fusionsenergiesystem, die Folgendes umfasst:
einen primären Wärmetauscher (102), der mit einer primären Wärmequelle (106) gekoppelt ist, und einen sekundären Wärmetauscher (108), der mit einer sekundären Wärmequelle (110) gekoppelt ist, wobei die sekundäre Wärmequelle von der primären Wärmequelle thermisch unabhängig ist, wobei die primäre Wärmequelle eine höhere Temperatur als die sekundäre Wärmequelle aufweist und wobei der primäre und der sekundäre Wärmetauscher dazu ausgelegt sind, ein Arbeitsfluid zu erwärmen, wobei der primäre Wärmetauscher dazu ausgelegt ist, durch den sekundären Wärmetauscher erwärmtes Arbeitsfluid aufzunehmen;
eine Hauptturbine (104) und eine Hilfsturbine (116), die strömungsparallel ausgelegt sind, wobei ein Verzweigungspunkt (118) für eine parallele Strömung zwischen dem primären Wärmetauscher und dem sekundären Wärmetauscher angeordnet ist und wobei die Hauptturbine durch den sekundären Wärmetauscher und anschließend den primären Wärmetauscher erwärmtes Arbeitsfluid aufnimmt und wobei die Hilfsturbine durch den sekundären Wärmetauscher erwärmtes Arbeitsfluid aufnimmt; und
einen ersten Diffusor (124), der dazu ausgelegt ist, den Arbeitsfluidabfluss von der Hauptturbine mit dem Arbeitsfluidzufluss zum primären Wärmetauscher thermisch zu koppeln.

2. Wärmekraftmaschine nach Anspruch 1, wobei der Verzweigungspunkt ein steuerbares Ventil umfasst, das dazu ausgelegt ist, den Durchfluss von Arbeitsfluid zu steuern, das vom sekundären Wärmetauscher zur Hauptturbine und Hilfsturbine geleitet wird.

3. Wärmekraftmaschine nach Anspruch 2, die ferner einen Temperatursensor umfasst, der mit dem Arbeitsfluidzufluss zum primären Wärmetauscher gekoppelt ist, und wobei das Ventil gesteuert wird, um den Durchfluss zum primären Wärmetauscher zu reduzieren, wenn die Temperatur des Zuflusses zum primären Wärmetauscher einen festgelegten Wert überschreitet.

4. Wärmekraftmaschine nach Anspruch 3, wobei der Verzweigungspunkt zwischen dem ersten Diffusor und dem sekundären Wärmetauscher angeordnet ist.

5. Wärmekraftmaschine nach einem der vorhergehenden Ansprüche, die ferner einen zweiten Diffusor (128) umfasst, der dazu ausgelegt ist, den Abfluss von der Hauptturbine mit dem Zufluss zur Hilfsturbine thermisch zu koppeln.

6. Wärmekraftmaschine nach Anspruch 5, die ferner einen Bypass des zweiten Diffusors am Abfluss aus der Hauptturbine und/oder am Zufluss in die Hilfsturbine umfasst.

7. Wärmekraftmaschine nach einem der vorhergehenden Ansprüche, die ferner einen dritten Diffusor (132) umfasst, der dazu ausgelegt ist, einen kombinierten Arbeitsfluidabfluss aus der Hauptturbine und der Hilfsturbine mit einem Arbeitsfluidzufluss zum sekundären Wärmetauscher thermisch zu koppeln.

8. Wärmekraftmaschine nach einem der vorhergehenden Ansprüche, die ferner einen tertiären Wärmetauscher (136) umfasst, der dazu ausgelegt ist, das Arbeitsfluid zu erwärmen, wobei der tertiäre Wärmetauscher mit einer tertiären Wärmequelle (138) gekoppelt ist, die eine niedrigere Temperatur als die primäre Wärmequelle aufweist.

9. Wärmekraftmaschine nach Anspruch 8, wobei der tertiäre Wärmetauscher in Strömungsreihe mit dem sekundären Wärmetauscher angeordnet ist, um Arbeitsfluid vor dem sekundären Wärmetauscher vorzuwärmen.

10. Wärmekraftmaschine nach Anspruch 8 oder 9, wenn außerdem abhängig von Anspruch 7, wobei der dritte Diffusor zwischen dem sekundären und tertiären Wärmetauscher angeordnet ist.

11. Wärmekraftmaschine nach einem der vorhergehenden Ansprüche, wobei die Hilfsturbine eine erste aus einem Satz Hilfsturbinen ist.

12. Wärmekraftmaschine nach Anspruch 11, wobei jede Turbine des Satzes Hilfsturbinen dazu ausgelegt ist, bei einer anderen Fluid gemäßigt zu arbeiten.

13. Wärmekraftmaschine nach einem der vorhergehenden Ansprüche, die ferner einen Brenner (142) umfasst, der dazu ausgelegt ist, Arbeitsfluid, das von der Hauptturbine aufgenommen wird, zu erwärmen.

14. Kernfusionsenergiesystem (200), das Folgendes umfasst:
einen Reaktor (201), der eine primäre Wärmequelle (206) und eine sekundäre Wärmequelle (210) umfasst, wobei die sekundäre Wärmequelle von der primären Wärmequelle thermisch unabhängig ist und die primäre Wärmequelle im Normalbetrieb eine höhere Temperatur als die sekundäre Wärmequelle aufweist;
die Wärmekraftmaschine nach einem der vorhergehenden Ansprüche, wobei der primäre Wärmetauscher mit der primären Wärmequelle des Reaktors gekoppelt ist und der sekundäre Wärmetauscher mit der sekundären Wärmequelle des Reaktors gekoppelt ist.

15. Verfahren zum Betreiben einer geschlossenen Arbeitsfluid-Wärmekraftmaschine nach den Ansprüchen 1-13 in einem Kernfusionsenergiesystem nach Anspruch 14,
wobei das Energiesystem einen Reaktor umfasst, der eine primäre Wärmequelle und eine sekundäre Wärmequelle liefert, wobei die sekundäre Wärmequelle von der primären Wärmequelle thermisch unabhängig ist, wobei die primäre Wärmequelle eine höhere Temperatur als die sekundäre Wärmequelle aufweist, wobei das Verfahren Folgendes umfasst:
Erwärmen des Arbeitsfluids unter Verwendung eines sekundären Wärmetauschers, der mit der sekundären Wärmequelle gekoppelt ist;
steuerbares Aufteilen des durch den sekundären Wärmetauscher erwärmten Arbeitsfluidstroms zwischen parallelen Fluidbahnen;
auf einer parallelen Fluidbahn zusätzliches Erwärmen des Arbeitsfluids unter Verwendung eines ersten Diffusors, der mit einem Arbeitsfluidabfluss aus einer Hauptturbine gekoppelt ist, und eines primären Wärmetauschers, der mit der primären Wärmequelle gekoppelt ist, und Arbeiten der Hauptturbine unter Verwendung des durch den primären und sekundären Wärmetauscher und den ersten Diffusor erwärmten Arbeitsfluids;
auf einer anderen parallelen Bahn, Arbeiten einer Hilfsturbine unter Verwendung von durch den sekundären Wärmetauscher erwärmtem Arbeitsfluid;
Wiedervereinigen von aus der Primär- und Hilfsturbine austretendem Arbeitsfluid in eine gemeinsame Strömungsbahn, die über mindestens einen Verdichter mit einem Zufluss zum sekundären Wärmetauscher gekoppelt ist.

## Revendications

1. Moteur thermique (100) destiné à être utilisé dans la production d'énergie électrique dans un réacteur à fusion, comprenant :
un échangeur de chaleur primaire (102) accouplé à une source de chaleur primaire (106), et un échangeur de chaleur secondaire (108) accouplé à une source de chaleur secondaire (110), la source de chaleur secondaire étant thermiquement indépendante de la source de chaleur primaire, la source de chaleur primaire ayant une température plus élevée que la source de chaleur secondaire, et les échangeurs de chaleur primaire et secondaire étant conçus pour chauffer un fluide de travail, l'échangeur de chaleur primaire étant conçu pour recevoir du fluide de travail chauffé par l'échangeur de chaleur secondaire,
une turbine principale (104) et une turbine auxiliaire (116) configurées en écoulement parallèle, un point de dérivation (118) pour l'écoulement parallèle étant situé entre l'échangeur de chaleur primaire et l'échangeur de chaleur secondaire, et la turbine principale recevant le fluide de travail chauffé par l'échangeur de chaleur secondaire et ultérieurement par l'échangeur de chaleur primaire, et la turbine auxiliaire recevant le fluide de travail chauffé par l'échangeur de chaleur secondaire ; et
un premier récupérateur (124) conçu pour accoupler thermiquement l'écoulement sortant de fluide de travail provenant de la turbine principale à l'écoulement entrant de fluide de travail vers l'échangeur thermique primaire.

2. Moteur thermique selon la revendication 1, le point de dérivation comprenant une soupape apte à être commandée conçue pour commander un débit de fluide de travail dirigé de l'échangeur de chaleur secondaire vers la turbine principale et la turbine auxiliaire.

3. Moteur thermique selon la revendication 2, comprenant en outre un capteur de température accouplé à l'écoulement entrant de fluide de travail vers l'échangeur de chaleur primaire, et la soupape étant commandée pour réduire un débit vers l'échangeur de chaleur primaire lorsqu'une température de l'écoulement entrant dans l'échangeur de chaleur primaire dépasse une valeur prédéfinie.

4. Moteur thermique selon la revendication 3, le point de dérivation étant situé entre le premier récupérateur et l'échangeur de chaleur secondaire.

5. Moteur thermique selon l'une quelconque des revendications précédentes, comprenant en outre un deuxième récupérateur (128) conçu pour accoupler thermiquement l'écoulement sortant provenant de la turbine principale à l'écoulement entrant dans la turbine auxiliaire.

6. Moteur thermique selon la revendication 5, comprenant en outre une dérivation du deuxième récupérateur sur au moins l'un parmi l'écoulement sortant provenant de la turbine principale et l'écoulement entrant dans la turbine auxiliaire.

7. Moteur thermique selon l'une quelconque des revendications précédentes, comprenant en outre un troisième récupérateur (132) conçu pour accoupler thermiquement l'écoulement sortant de fluide de travail combiné provenant de la turbine principale et de la turbine auxiliaire à l'écoulement entrant de fluide de travail vers l'échangeur de chaleur secondaire.

8. Moteur thermique selon l'une quelconque des revendications précédentes, comprenant en outre un échangeur de chaleur tertiaire (136) conçu pour chauffer le fluide de travail, l'échangeur de chaleur tertiaire étant accouplé à une source de chaleur tertiaire (138) ayant une température inférieure à celle de la source de chaleur primaire.

9. Moteur thermique selon la revendication 8, l'échangeur de chaleur tertiaire étant disposé en série avec l'échangeur de chaleur secondaire pour préchauffer le fluide de travail avant l'échangeur de chaleur secondaire.

10. Moteur thermique selon la revendication 8 ou 9, lorsqu'elle dépend également de la revendication 7, le troisième récupérateur étant disposé entre les échangeurs de chaleur secondaire et tertiaire.

11. Moteur thermique selon l'une quelconque des revendications précédentes, la turbine auxiliaire étant une première turbine d'un ensemble de turbines auxiliaires.

12. Moteur thermique selon la revendication 11, chaque turbine de l'ensemble de turbines auxiliaires étant conçue pour fonctionner à une tempérée de fluide différente.

13. Moteur thermique selon l'une quelconque des revendications précédentes, comprenant en outre un brûleur à combustion (142) conçu pour chauffer le fluide de travail reçu par la turbine principale.

14. Réacteur à fusion nucléaire (200) comprenant :
un réacteur (201) comprenant une source de chaleur primaire (206) et une source de chaleur secondaire (210), la source de chaleur secondaire étant thermiquement indépendante de la source de chaleur primaire et la source de chaleur primaire ayant une température supérieure à la source de chaleur secondaire en fonctionnement normal ;
le moteur thermique selon l'une quelconque des revendications précédentes, l'échangeur de chaleur primaire étant accouplé à la source de chaleur primaire du réacteur, et l'échangeur de chaleur secondaire étant accouplé à la source de chaleur secondaire du réacteur.

15. Procédé de fonctionnement d'un moteur thermique à fluide de travail fermé selon les revendications 1 à 13 dans un réacteur à fusion nucléaire selon la revendication 14,
le système de puissance comprenant un réacteur produisant une source de chaleur primaire et une source de chaleur secondaire, la source de chaleur secondaire étant thermiquement indépendante de la source de chaleur primaire, la source de chaleur primaire ayant une température supérieure à celle de la source de chaleur secondaire, le procédé comprenant les étapes consistant à :
chauffer le fluide de travail à l'aide d'un échangeur de chaleur secondaire accouplé à la source de chaleur secondaire,
scinder de façon contrôlée le flux de fluide de travail chauffé par l'échangeur de chaleur secondaire entre des trajets de fluides parallèles ;
sur un trajet de fluide parallèle, chauffer en outre le fluide de travail à l'aide d'un premier récupérateur accouplé à l'écoulement sortant de fluide de travail provenant d'une turbine principale et d'un échangeur de chaleur primaire accouplé à la source de chaleur primaire, et faire fonctionner la turbine principale à l'aide du fluide de travail chauffé par les échangeurs de chaleur primaire et secondaire et le premier récupérateur ;
sur un autre trajet parallèle, faire fonctionner une turbine auxiliaire à l'aide du fluide de travail chauffé par l'échangeur de chaleur secondaire ;
regrouper le fluide de travail sortant des turbines primaire et auxiliaire dans un trajet d'écoulement commun accouplé à un écoulement entrant dans l'échangeur de chaleur secondaire par l'intermédiaire d'au moins un compresseur.
